**Europäisches Patentamt**

**European Patent Office**

**Office européen des brevets**

(11) Numéro de publication : **0 545 757 A1**

# (12) DEMANDE DE BREVET EUROPEEN

(21) Numéro de dépôt : **92403095.0**

(51) Int. Cl.⁵ : **C01G 45/00,** C01G 37/00

(22) Date de dépôt : **18.11.92**

(30) Priorité : **29.11.91 FR 9114772**

(43) Date de publication de la demande :
**09.06.93 Bulletin 93/23**

(84) Etats contractants désignés :
**AT CH DE DK ES FR GB IT LI NL SE**

(71) Demandeur : **RHONE-POULENC CHIMIE**
**25, quai Paul Doumer**
**F-92408 Courbevoie Cédex (FR)**

(72) Inventeur : **Lafon, Marie-Odile**
**15 rue Beautreillis**
**F-75004 Paris (FR)**
Inventeur : **Nussbaum, Hubert**
**14 Lotissement Le Colombier**
**F-60440 Boissy Fresnoy (FR)**
Inventeur : **Tourre, Jean-Michel**
**6 Classe Blanche de Castille**
**F-78290 Croissy s/Seine (FR)**
Inventeur : **Yunlu, Kenan**
**27-07 Ravens Crest Drive**
**Plainsboro, NJ 08536 (US)**

(74) Mandataire : **Dubruc, Philippe et al**
**RHONE-POULENC CHIMIE Service**
**IOM/BREVETS, 25,quai Paul Doumer**
**F-92408 Courbevoie (FR)**

(54) Procédé de préparation de pérovskites à base de manganèse ou de chrome et pérovskites ainsi obtenues.

(57)    L'invention concerne des compositions à base de pérovskites de manganèse ou de chrome.
   Ces compositions présentent une homogénéité chimique telle que les domaines d'hétérogénéité sont d'au plus 1 $\mu m^3$.
   Elles sont obtenues par un procédé caractérisé en ce qu'on forme un mélange comprenant des sels et/ou des sols des éléments constitutifs de la composition, on sèche ledit mélange et on calcine le produit séché.

EP 0 545 757 A1

La présente invention concerne un procédé de préparation d'une composition à base de pérovskite de manganèse ou de chrome et les pérovskites ainsi obtenues.

Ces compositions sont intéressantes pour la préparation de piles à combustible.

Généralement, elles sont obtenues par réaction solide de poudres à hautes températures. Ce type de procédé présente l'inconvénient de nécessiter des temps de réaction relativement longs avec souvent plusieurs étapes de broyage complémentaires qui constituent une source de pollution. D'autre part, les produits obtenus par ce procédé frittent relativement difficilement. Enfin il est difficile de contrôler la stoechiomètrie ce qui entraîne une diminution des propriétés électriques et électroniques des produits.

Un premier objet de l'invention est de préparer des produits de pureté améliorée ainsi que de morphologie et de stoechiomètrie contrôlées.

Un autre objet est de préparer des produits à frittabilité améliorée tout particulièrement dans le cas des chromites.

Dans ce but, le procédé selon l'invention de préparation d'une composition à base de pérovskite d'au moins un élément choisi parmi le manganèse et le chrome est caractérisé en ce qu'on forme un mélange comprenant des sels et/ou des sols des éléments constitutifs de la composition, on sèche ledit mélange et on calcine le produit séché.

D'autre part, les compositions selon l'invention à base de pérovskites d'au moins un élément choisi parmi le manganèse et le chrome présentent une homogénéité chimique telle que les domaines d'hétérogénéité sont d'au plus 1 $\mu m^3$.

Les produits de l'invention peuvent atteindre, après frittage des densités inférieures à 95% de la densité théorique à une température plus faible et sur une plage de température plus resserrée que dans le cas des produits de l'art antérieur.

D'autres caractéristiques et avantages de l'invention apparaîtront plus clairement à la lecture de la description et des exemples qui vont suivre.

L'invention permet la préparation d'une large gamme de composition à base de pérovskites comprenant du manganèse, du chrome ou les deux.

Par pérovskites, on entend des produits de structure du type $ABO_3$ dans laquelle A, substitué ou non, est un élément coordonné à 12 atomes d'oxygène, et B, substitué ou non, est un élément coordonné à 6 atomes d'oxygène.

Comme première famille importante de produits, on peut citer les pérovskites comprenant, outre le manganèse et/ou le chrome, au moins une terre-rare.

Par terres-rares, on entend, outre l'yttrium, les éléments dont le numéro atomique varie de 57 à 71.

Cette terre rare peut être partiellement substituée notamment par un alcalino-terreux, tel que le calcium ou le strontium.

Les pérovskites à base d'une terre rare peuvent aussi comprendre un élément choisi dans le groupe VIII de la classification périodique des éléments.

Il est à noter, ici et pour toute la description, que les groupes ou colonnes des éléments cités correspondent à la classification périodique des éléments publiés dans le Supplément au Bulletin de la Société Chimique de France n° 1 (Janvier 1966).

Comme exemple de cette première famille de produits, on peut citer ceux de formule $A_{1-x}M_xM'_yB_{1-y}O_3$ dans laquelle A est une terre-rare, plus particulièrement le lanthane, M est un alcalino-terreux, plus particulièrement le strontium, M' est un élément du groupe VIII, B est le chrome et/ou le manganèse et avec $O \leqq x \leqq 1$ et $0 \leqq y \leqq 0,5$.

On peut mentionner plus particulièrement $LaC_rO_3$, $LaM_nO_3$, $La(Mn_{1-y}Co_y)O_3$, $La(Mn_{1-y}Ni_y)O_3$, $La(Cr,Mn)O_3$,

$(La_{1-x},Sr_x)CrO_3$, $La_{1-x}Ca_xCo_{1-y}Cr_yO_3$.

Une autre famille de produits susceptibles d'être préparés par le procédé de l'invention est constituée par les pérovskites comprenant, outre le manganèse et/ou le chrome, un alcalino-terreux et éventuellement un élément choisi dans le groupe des éléments de transition (IIIa à IIb) ou dans le groupe Vb.

A titre d'exemples, on peut donner les produits suivants : $Sr(Cr_{0,5}Mo_{0,5})O_3$, $Sr(Cr_{0,5}Sb_{0,5})O_3$, $Sr(Mn_{0,5}Mo_{0,5})O_3$, $CaMnO_3$, $Sr(Cr_{0,5}W_{0,5})O_3$.

Les compositions à base de pérovskites selon l'invention présentent une homogénéité de composition. Cette homogénéité est mesurée par la méthode de cartographie par spectroscopie à dispersion d'énergie (EDX) en utilisant une microsonde de microscopie électronique à balayage MEB.

Le procédé de l'invention va maintenant être décrit plus précisément.

La caractéristique principale de l'invention réside dans le fait que l'on utilise comme produits de départ les sels ou les sols des éléments constitutifs des compositions. On entend par éléments constitutifs, le manganèse, le chrome et tous les autres éléments entrant dans la composition, du type décrit plus haut.

Le choix entre sel et sol pourra se faire en fonction de la disponibilité des produits, de leur stabilité et pour ce qui concerne les sels de leur température de fusion et de décomposition.

Ainsi, dans le cas où les éléments sont apportés sous forme de nitrates, on utilise alors de préférence un sol de chrome, le nitrate de chrome fondant entre 60 et 100°C, et se décomposant à partir de cette température peut entraîner le collage du produit sur l'appareillage lors du séchage.

Ce sol peut être obtenu en particulier par mise en solution aqueuse du nitrate de chrome, puis précipitation en milieu basique de l'hydroxyde de chrome. On récupère le précipité par centrifugation après lavage. Enfin, on effectue une peptisation du précipité lavé.

Les éléments constitutifs sont utilisés sous la forme de sels d'acides organiques ou inorganiques.

Tous les acides inorganiques ou organiques conviennent à la mise en oeuvre du procédé dans la mesure où ils forment des sels solubles dans le mélange réactionnel qui peut être un milieu aqueux et organique avec les éléments constitutifs de la composition.

Toutefois, selon un mode de réalisation particulier, on choisit les nitrates, les chlorures ou les sulfates, comme sels d'acides inorganiques. Les nitrates sont les sels préférés.

Concernant les sels d'acides organiques et selon un second mode particulier de réalisation de l'invention, ceux-ci sont choisis parmi les sels d'acides carboxyliques aliphatiques saturés ou parmi les sels d'acides hydroxycarboxyliques.

Ainsi, au titre d'acides carboxyliques aliphatiques saturés, on peut citer les formiates, le acétates, les propionates.

Quant aux acides hydroxycarboxyliques, on utilise habituellement les citrates.

Les concentrations des divers sels des éléments dans le milieu réactionnel sont ajustées selon la stoechiométrie de la composition finale désirée et sont en général comprises entre 0,1 et 5M.

La mise en présence des éléments se fait par mélange du ou des sols avec, par exemple, les solutions de sel. Ce mélange pourra se faire par introduction du sol dans la solution contenant les sels ou inversement, l'ordre d'introduction pouvant dépendre de la stabilité du sol en fonction du pH.

On travaille dans des conditions telles que l'on évite la précipitation des sels, ce qui implique donc que l'on soit à un pH suffisamment acide.

Par ailleurs, il faut se situer dans un domaine de concentration des éléments tel qu'il n'y ait pas apparition d'un gel, mais obtention d'un mélange des éléments dans une phase liquide ou d'une suspension homogène du ou des éléments du sol dans la solution des autres éléments. Ceci est obtenu en jouant sur la dilution desdits éléments.

La suspension ou mélange ainsi obtenu est ensuite séché.

On procède à ce séchage selon toute méthode connue.

Cependant, de préférence, le mélange est séché par atomisation.

Cette atomisation peut se faire en utilisant tout atomiseur classique, par exemple à turbine ou à buse.

Dans ce cas, la température d'entrée des gaz en début de séchage est habituellement comprise entre 200 et 300°C, par exemple voisine de 250°C, celle de sortie peut varier entre 120 et 200°C. On utilise une pression d'air comprise par exemple entre 2 et 3 bars.

Selon un mode de réalisation particulier, on sèche ledit mélange par injection de celui-ci dans un gaz ayant une vitesse suffisante pour l'atomiser.

Ainsi, selon un mode de réalisation préféré de l'invention, le séchage est effectué dans un réacteur "flash", par exemple du type mis au point par la Demanderesse et décrit notamment dans les brevets français n° 2 257 326, 2 419 754, 2 431 321. Dans ce cas, les gaz chauds sont animés d'un mouvement hélicoïdal et s'écoulent dans un puits-tourbillon. La suspension est injectée suivant une trajectoire confondue avec l'axe de symétrie des trajectoires hélicoïdales des gaz, ce qui permet de transférer parfaitement la quantité de mouvement des gaz aux particules de cette suspension. Par ailleurs, le temps de séjour des particules dans le réacteur est extrêmement faible, il est en général inférieur à 1/10 de seconde, ce qui supprime tout risque de surchauffe par suite d'un contact trop long avec les gaz.

Selon les débits respectifs des gaz et de la suspension, la température d'entrée des gaz est comprise entre 400 et 900°C et plus particulièrement 600-800°C, la température du solide séché entre 150 et 300°C.

En ce qui concerne le réacteur flash mentionné plus haut, on pourra se référer notamment à la figure 1 de la demande de brevet français n° 2 431 321.

Ledit réacteur est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de la phase combustible.

D'autre part, la chambre de combustion comprend un cylindre interne coaxial, définissant ainsi à l'intérieur

3

de celle-ci une zone centrale et une zone périphérique annulaire et présentant des perforations se situant pour la plupart vers la partie supérieure de ladite chambre. Celle-ci comprend au minimum six perforations distribuées sur au moins un cercle, rais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact.

La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite, le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisées près et au-dessous du passage réduit, avant de diverger dans toutes les directions.

On introduit ensuite la substance à traiter sous forme de liquide par le tuyau précité.

Le liquide est alors fractionné en une multitude de gouttes, chacune d'elles étant transportée par un volume de gaz et soumise à un mouvement créant un effet centrifuge.

Habituellement, le débit du liquide est compris entre 0,03 et 10 m/s.

Le rapport entre la quantité de mouvement propre de la phase hélicoïdale à celle du liquide doit être élevé. En particulier, il est d'au moins 100 et de préférence compris entre 1000 et 10000.

Les quantités de mouvement au niveau du passage réduit sont calculées en fonction des débits d'entrée du gaz et de la substance à traiter, ainsi que de la section dudit passage. Une augmentation des débits entraîne un grossissement de la taille des gouttes.

Dans ces conditions, le mouvement propre des gaz est imposé dans sa direction et son intensité aux gouttes de la substance à traiter, séparées les unes des autres dans la zone de convergence des deux courants.

La vitesse du liquide est de plus réduite au minimum nécessaire pour obtenir un flot continu.

Le rapport de la masse du liquide et du gaz est bien évidemment choisi en fonction de plusieurs facteurs comme la température du fluide et l'opération à effectuer, comme la vaporisation du liquide.

Il est à noter que cette représentation et ce fonctionnement du réacteur "flash" ne sont qu'un exemple et que d'autres réalisations et fonctionnement sont envisageables.

Après séchage du mélange comprenant les sols et/ou les sels d'éléments constitutifs de la composition, la poudre récupérée est calcinée.

Cette calcination a pour but d'éliminer les anions, par exemple les nitrates présents dans le produit séché. Elle a aussi pour but de former la phase recherchée.

La calcination est effectuée sous air et/ou sous un mélange air/oxygène en atmosphère statique ou sous balayage à une température variant entre 800° et 1200°C.

La durée de la calcination est habituellement comprise entre 15 minutes et 10 heures en fonction de la température et du type de four utilisé.

Il est à noter qu'une étape de broyage préalable à la calcination n'est pas nécessaire.

Toutefois, on ne sortirait pas du cadre de la présente invention en effectuant une telle opération.

Enfin, après calcination, on peut procéder à une désagglomération du produit pour obtenir la surface spécifique adéquate. Cette désagglomération a pour effet de détruire seulement les agglomérats sans attaquer les agrégats. Elle peut donc se faire dans des conditions douces et non polluantes, par exemple avec un broyeur à jet d'air.

En l'absence de tout broyage, on obtient un produit sous forme d'agglomérats de diamètre moyen situé entre 1 et 15µm environ, ces agglomérats étant constitués de particules élémentaires de diamètre moyen de 0,2 à 0,3µm environ. Le broyage au jet d'air permet d'obtenir un produit sous forme d'agrégats de ces particules élémentaires, de diamètre submicronique, plus particulièrement de 0,3 à 1µm environ.

L'invention concerne aussi les produits susceptibles d'être obtenus par le procédé de l'invention. En conséquence, tout ce qui a été dit plus haut au sujet du procédé s'applique pour la définition du produit.

Des exemples concrets mais non limitatifs vont maintenant être donnés.

## EXEMPLE 1

Cet exemple concerne la préparation du produit $La_{0,9}Sr_{0,1}CrO_3$.

On prépare tout d'abord un sol de chrome de la manière suivante :

On part d'une solution d'ammoniaque obtenue à partir de 2 kg de $NH_3$ à 32% dilué 6 fois dans laquelle on coule une solution de nitrate de chrome à la concentration de 2 kg de nitrate dans 12 kg d'eau. on obtient un précipité de chrome à 0,23 mole de Cr/kg qui est lavé à pH 9 et peptisé à l'acide nitrique concentré (14N), de façon à obtenir un pH de 5,5. On obtient 17,3 kg de sol de chrome à 0,34 mole/kg.

On forme ensuite une solution de nitrate de strontium dans l'eau (99 g de $Sr(NO_3)_2$ dilué dans 300 g d'eau). on y ajoute une solution de nitrate de lanthane (3,3 kg de $La(NO_3)_2$ à 22,5%) et enfin le sol obtenu précédemment.

La solution obtenue est séchée dans un réacteur "flash" du type décrit plus haut dans les conditions suivantes : températures d'entrée des gaz 750°C, température du solide séché 150°C.

Le produit obtenu (5 kg) est calciné dans un four statique à 1000°C avec une montée en température de 5°C/mn et un palier de 2 h 15 mn.

On obtient un produit (1,05 kg) présentant la formule donnée plus haut de diamètre moyen (CILAS) de 1,1µm et de 2,2 m2/g de surface spécifique.

Le produit est homogène en composition à l'échelle du µm³.

## EXEMPLE 2

On procède de la même manière que dans l'exemple 1 en faisant varier les proportions des réactifs et les températures de calcination. En outre, la calcination est effectuée dans un four tournant, le temps de séjour est de 20 minutes.

La température de sortie du produit est de 150°C.

Les produits sont dans un cas broyés au broyeur à jet d'air. Les résultats sont rassemblés dans le tableau ci -dessous :

| Produit | Température de calcina-tion °C | $d_{50}$ (µm) (CILAS) | Surface spécifique m2/g |
|---|---|---|---|
| $La_{0,84}Sr_{0,16}CrO_3$ | 975 | 5,06 | 3,3 |
| $La_{0,84}Sr_{0,16}CrO_3$ (broyé) | 975 | 0,43 | 3,7 |

## EXEMPLE 3

On procède de la même manière que dans l'exemple 1 en faisant varier les proportions de réactifs et les températures de calcination pour préparer des manganites, le manganèse étant introduit sous forme nitrate.

La calcination est effectuée dans un four tournant, le temps de séjour est de 20 minutes.

La température de sortie du produit séché est de 220°C. Les produits sont dans un cas broyés au broyeur à jet d'air. Les résultats sont rassemblés dans le tableau ci-dessous.

| Essais | Produit | | Température de calcina- tion °C | $d_{50}$ (µm) (CILAS) | Surface spécifique $m^2/g$ |
|--------|---------|---|--------------------------------|-----------------------|----------------------------|
| 1 | $La_{0,5}Sr_{0,5}MnO_3$ | | 950 | 10,79 | 7,6 |
| 2 | $La_{0,5}Sr_{0,5}MnO_3$ | (broyé) | 950 | 0,57 | 9,4 |
| 3 | $La_{0,9}Sr_{0,1}MnO_3$ | | 975 | 9,3 | 5,5 |
| 4 | $La_{0,9}Sr_{0,1}MnO_3$ | | 1150 | 7,89 | 1,9 |

Les spectres RX montrent que les produits obtenus sont purs phasiquement.

EXEMPLE 4

Pour la préparation de 10 kg de $La_{0,8}Ca_{0,2}Co_{0,1}Cr_{0,9}O_3$, on mélange 21,502 kg de nitrate de La (23,5 % en poids de La), 2,16 kg de nitrate de Ca (16,88 % en poids de Ca), 1,324 kg de nitrate de Co (20,25 % en poids de Co) et 16,502 kg de nitrate de Cr (12,9 % au poids de Cr). On ajoute de l'eau jusqu'à un volume total de 320 litres.

Le séchage de la solution est fait dans un réacteur flash dans les conditions suivantes :
    température d'entrée des gaz : 750°C
    température du solide séché : 220°C
    pression d'atomisation : 0,8 bar

Le produit obtenu est calciné 1 heure à 920°C.

Les caractéristiques de la poudre obtenue sont les suivantes :
    surface spécifique : 3,2 m2/g
    taille de particule : d50=1,15 µm ; d10=0,53 µm ; d90=1,99 µm.

On presse ensuite la poudre uniaxialement en petits disques sous une pression de 2t/cm2.

Les disques sont frittés à l'air à 1400°C en 1 heure. Les résultats sont les suivants par rapport à la densité théorique :
    densité à cru : 47 %
    densité à l'état fritté : 99 %

Cette dernière densité a été mesurée par la méthode d'Archimède avec dégazage.

**Revendications**

**1** - Procédé de préparation d'une composition à base de pérovskite d'au moins un élément choisi parmi le manganèse et le chrome, caractérisé en ce qu'on forme un mélange comprenant des sels et/ou des sols des éléments constitutifs de la composition, on sèche ledit mélange et on calcine le produit séché.

**2** - Procédé selon la revendication 1, caractérisé en ce qu'on prépare une composition à base d'une pérovskite comprenant en outre une terre rare.

**3** - Procédé selon la revendication 2, caractérisé en ce qu'on prépare une composition à base d'une pérovskite comprenant en outre une terre-rare partiellement substituée, notamment par un alcalino-terreux.

**4** - Procédé selon la revendication 2 ou 3, caractérisé en ce qu'on prépare une composition à base d'une pérovskite comprenant en outre un élément choisi dans le groupe VIII de la classification périodique.

**5** - Procédé selon la revendication 1, caractérisé en ce qu'on prépare une composition à base d'une pérovskite comprenant un alcalino-terreux et éventuellement un élément choisi dans les groupes des éléments de transition et du groupe Vb de la classification périodique.

**6** - Procédé selon l'une des revendications 1 à 4, caractérisé en ce qu'on prépare une composition à base d'une pérovskite de formule :

$$A_{1-x}M_xM'_yB_{1-y}O_3$$

A étant une terre-rare, plus particulièrement le lanthane, B le manganèse ou le chrome, M un alcalino-terreux, plus particulièrement le strontium, M' un élément du groupe VIII, et $O \leqq x \leqq 1$, $O \leqq y \leqq 0,5$.

**7 -** Procédé selon l'une des revendications précédentes, caractérisé en ce que l'on utilise les éléments constitutifs sous la forme de sels d'acides inorganiques et plus particulièrement sous la forme de nitrates.

**8 -** Procédé selon l'une des revendications précédentes, caractérisé en ce que l'on utilise les éléments constitutifs sous la forme de sels d'acides organiques et plus particulièrement sous la forme de formiates, d'acétates, de propionates, de citrates et/ou d'oxalates.

**9 -** Procédé selon l'une des révendications précédentes, caractérisé en ce que l'on sèche le mélange précité par atomisation.

**10 -** Procédé selon la revendication 9, caractérisé en ce qu'on sèche le mélange par injection de celui-ci dans un gaz ayant une vitesse suffisante pour l'atomiser.

**11 -** Procédé selon la revendication précédente, caractérisé en ce que l'on sèche le mélange par injection de celui-ci suivant une trajectoire confondue avec l'axe de symétrie d'un écoulement hélicoïdal et puits-tourbillon de gaz chauds assurant la pulvérisation, puis le séchage dudit mélange.

**12 -** Composition à base de pérovskite d'au moins un élément choisi parmi le manganèse et le chrome, la pérovskite pouvant comprendre en outre une terre rare éventuellement substituée, ou un alcalino-terreux, caractérisée en ce qu'elle présente une homogénéité chimique telle que les domaines d'hétérogénéité sont d'au plus 1 $\mu m^3$.

**13 -** Composition à base de pérovskite d'au moins un élément choisi parmi le manganèse et le chrome, caractérisée en ce qu'elle est susceptible d'être obtenue par un procédé dans lequel on forme un mélange comprenant des sels et/ou des sols des éléments constitutifs de la composition, on sèche ledit mélange, notamment par atomisation, et on calcine le produit séché.

Office européen
des brevets

**RAPPORT DE RECHERCHE EUROPEENNE**

Numero de la demande

EP    92 40 3095

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-A-2 824 408 (DORNIER SYSTEM)<br>* le document en entier *<br>--- | 1-10,13 | C01G45/00<br>C01G37/00 |
| X | EP-A-0 008 430 (DORNIER SYSTEM)<br>* revendications 1,2 *<br>--- | 1-6 | |
| A | EP-A-0 309 322 (RHONE POULENC)<br>* revendications 1-18 *<br><br>----- | 1-5,7-12 | |

DOMAINES TECHNIQUES RECHERCHES (Int. Cl.5 )

C01G
C25B

Le présent rapport a été établi pour toutes les revendications

| Lieu de la recherche | Date d'achèvement de la recherche | Examinateur |
|---|---|---|
| LA HAYE | 01 MARS 1993 | libberecht-verbeeck |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..............................................................................
& : membre de la même famille, document correspondant

EPO FORM 1503 03.82 (P0402)